# EUROPEAN PATENT APPLICATION

(11) **EP 1 793 526 A1**
(43) Date of publication of application: **06.06.2007**
(21) Application number: 04788079.4
(22) Date of filing: 24.09.2004
(51) Int. Cl.: H04L 9/32, G06F 15/00

(54) **DATA COMMUNICATION METHOD**

(71) Applicant: SyncPlus, Inc., Tokyo 150-0011 (JP); Kawakita, Jun, Tokyo 150-0011 (JP)
(72) Inventor: KAWAKITA, Jun, SyncPlus, Inc., Tokyo 150-0011 (JP)
(74) Representative: HOFFMANN EITLE
(86) International application number: PCT/JP2004/013920
(87) International publication number: WO 2006/033150

(57) **Abstract**

A data communication method capable of performing a synchronization processing at two or more computer terminals while ensuring security. A server certificate and a public key are transmitted through a host-side terminal to a guest-side terminal, whereby the guest-side terminal authenticates the server, and a guest-side hash key used in a hash function, as well as the hash function, are encrypted with the public key. A web server decrypts the hash key and the hash function, creates a digest of the contents with the guest-side hash key, and transmits the digest through the host-side terminal to the guest-side terminal. The guest-side terminal receives the contents and digest received from the host-side terminal, and compares this digest and a digest created from the received contents, whereby security can be ensured when the synchronization processing is performed.

## Description

### FIELD OF THE INVENTION

The present invention relates to a data communication method capable of executing a synchronization processing while ensuring security when executing a synchronization program which displays the same display screen on at least two or more computer terminals.

### BACKGROUND OF THE INVENTION

Secure data communication between a server and a computer terminal is carried out using a data communication method referred to as SSL (Secure Socket Layer), as disclosed in Nonpatent Reference 1. The data communication method using the SSL encrypts data exchanged between the server and the computer terminal and authenticates the server, whereupon data communication is performed. Therefore, higher convenience may be achieved and the technology has become the current standard.

There is also a synchronization program which is capable of displaying contents such as text strings and images in such as a web browser while performing synchronization among a plurality of computer terminals, as disclosed in Patent References 1 and 2 below.

In the synchronization program disclosed in Patent Reference 1, a host-side computer terminal obtains contents from a web server through a session server and displays the contents on the host-side computer terminal while a guest-side computer terminal retrieves the contents thus obtained from the host-side computer terminal to enable synchronized display of the contents on both the host- and guest-side computer terminals.
Patent Reference 1: WO/2004/070616
Nonpatent Reference 1: "Public Information Security Sites," Ministry of Internal Affairs and Communication, 2003, Internet <URL: http://www.soumu.go.jp/hojo-tsusin/security/kiso/k01_ssl.htm>

### SUMMARY OF THE INVENTION

### PROBLEM TO BE SOLVED BY THE INVENTION

When data communication is carried out using an encryption communication protocol such as the SSL described above, the data communication is assumed to be peer-to-peer, and secure data communication can be carried out between a web server and a host-side computer terminal. However, there is a problem that a guest-side computer terminal cannot authenticate the web server, and data communication cannot be made secure.

More specifically, when a synchronization program such as the one disclosed in Patent Reference 1 is used, all the terminals that exchange data with a web server are host-side computer terminals, and the web server cannot recognize a guest-side computer terminal. Therefore, the guest side cannot authenticate the web server, and data communication cannot be made secure.

### MEANS FOR SOLVING THE PROBLEM

In view of the foregoing, the inventors of the present invention have devised a data communication method capable of executing data communication while ensuring security when a synchronization program such as the one disclosed in patent reference 1 is used to perform synchronous display; namely, when display is synchronized among a plurality of computer terminals, wherein one computer terminal is delegated to exchange data with a server, and contents are received by other computer terminals from the delegated computer terminal to enable the synchronization processing.

The invention in accordance with Claim 1 provides a data communication method performed when a synchronization processing of contents stored on a web server is performed between a host-side terminal capable of encrypted communication through at least one or more session servers, and at least one or more guest-side terminals, wherein: said host-side terminal, receives and stores a server certificate and a public key from said web server, and transfers said server certificate and said public key to said guest-side terminal through said session server; said guest-side terminal, receives said server certificate and said public key from said host-side terminal and authenticates said server certificate, creats a guest-side hash key for generating a digest of said contents, encrypts said guest-side hash key and a hash function with said public key, and transmits the encrypted key and function to said host-side terminal; said host-side terminal, authenticates said received server certificate; creates a host-side common key for encrypting said contents with a common key encryption scheme; encrypts said host-side common key and said common key encryption scheme with said public key; and transmits to said web server these encrypted key and method, the encrypted guest-side hash key, and said hash function received from said guest-side terminal; said web server, decrypts the encrypted host-side common key and common key encryption scheme received from said host-side terminal, as well as the encrypted said guest-side hash key and said hash function, on the basis of a private key that corresponds to said public key; creates said digest for said contents with said hash function on the basis of said decrypted guest-side hash key; encrypts the thus created digest and said contents with said common key encryption scheme on the basis of said decrypted host-side common key; and transmits the encrypted digest and contents to said host-side terminal; said host-side terminal, receives said encrypted digest and said contents from said web server; decrypts said encrypted digest and contents with said created host-side common key; transmits said decrypted digest and contents to said guest-side terminal through said session server, and displays said contents on said host-side terminal; and said guest-side terminal, receives said decrypted digest and contents from said host-side terminal; creates a digest from said received contents on the basis of said created guest-side hash key and hash function; compares the digest with said received digest; and displays said contents on said guest-side terminal if the digests are matched.

The guest-side terminal can authenticate the server by transmitting a server certificate and a public key through a host-side terminal to a guest-side terminal. In addition, the guest-side terminal encrypts the guest-side hash key used in a hash function and the hash function with a public key, the web server decrypts them and creates a digest of the contents with the guest-side hash key to transmit it to the guest-side terminal through the host-side terminal, and the guest-side terminal receives the contents and digest received from the host-side terminal and thereafter compares the digest with the digest created from the received contents thereby to allow an unauthorized change to be detected over the communication path of the contents.

With the data communication method described above, data can be communicated upon ensuring security in accordance with a 1:n relationship, as opposed to conventional data communication in which security is ensured in accordance with a 1:1 relationship, as in SSL

The invention in accordance with Claim 2 provides a data communication method according to Claim 1, wherein the encrypted communication between said host-side terminal and said guest-side terminal is performed by performing encrypted communication between said host-side terminal and said session server and between said guest-side terminal and said session server.

Secure data communication can also be carried out between a host-side terminal and a guest-side terminal by implementing encrypted communication according to a 1:1 relationship for respective paths.

The invention in accordance with Claim 3 provides a data communication method according to either Claim 1 or 2, wherein the synchronization processing is initiated when the user of said host-side terminal selects said content display request, whereby it is confirmed whether said host-side terminal stores said contents; if the contents are stored, then said contents are displayed on said host-side terminal and a content update event is notified to said guest-side terminal through said session server, whereby said contents that corresponding to the content send request received from said guest-side terminal is transmitted to said guest-side terminal and the contents on said guest-side terminal that has received the contents; if not stored, then said content send request is transmitted from said host-side terminal to said web server; whereby said web server transmits said server certificate and public key to said host-side terminal.

The invention in accordance with Claim 4 provides a data communication method according to any one of Claim 1 through 3, wherein the synchronization processing is initiated when the user of said guest-side terminal selects the display request of said contents, whereby it is confirmed whether said guest-side terminal stores said contents; if the contents are stored, then said contents are displayed on said guest-side terminal and a content update event is notified to said host-side terminal through said session server, whereby said contents stored at said host-side terminal are displayed on said host-side terminal; if the contents are not stored, then the send request of said contents is transmitted from said guest-side terminal to said host-side terminal and said host-side terminal that has received the request confirms whether said host-side terminal stores said contents; if said host-side terminal stores the contents, then said contents are displayed on said host-side terminal and a content update event said is notified to guest-side terminal through said session server, whereby; said contents corresponding to the content send request received from said guest-side terminal are transmitted to said guest-side terminal and said contents are displayed on said guest-side terminal that has received the contents; and if said host-side terminal does not store the contents, then a send request of said contents is transmitted from said host-side terminal to said web server, whereby said web server transmits said server certificate and public key to said host-side terminal.

In the synchronization processing of the contents, it is preferable for the host-side terminal to receive the contents from the web server and to transmit the contents to the guest-side terminal when has made the content send request has been made by the host-side terminal or the guest-side terminal. In this arrangement, the contents, to be stored in the host-side terminal and the guest-side terminal are ensured to be synchronized.

The invention in accordance with Claim 5 provides a data communication system used when a synchronization processing of contents stored on a web server is performed between a host-side terminal capable of encrypting communication through at least one or more session servers and at least one or more guest-side terminals, wherein: said web server comprises: public key and certificate transmitting means for transmitting to said host-side terminal a server certificate and public key stored in key and certificate storing means; common key receiving means for receiving from said host-side terminal a host-side common key created by said host-side terminal and encrypted by said public key and an encryption scheme thereof, as well as a guest-side hash key created by said guest-side terminal and encrypted by said public key and a hash function thereof; common key decrypting means for decrypting said encrypted host-side common key and encryption scheme, as well as said encrypted guest-side hash key and hash function, by a private key stored in said public key and certificate storing means; encrypting means for extracting, from server-side content storage means for storing said contents, the contents corresponding to the content send request received by said web server from said host-side terminal, creating a digest of said contents on the basis of said decrypted guest-side hash key and hash function, and encrypting said created digest and said contents on the basis of said decrypted host-side common key and encryption scheme; and server-side content transmitting means for receiving the send request of said contents from said host-side terminal and transmitting to said host-side terminal the digest and contents encrypted by said encryption means; said host-side terminal comprises: host-side public key and certificate receiving means for receiving said server certificate and said public key from said web server for storage in host-side public key and certificate storage means; public key and certificate transferring means for transferring said received server certificate and said public key to said guest-side terminal; host-side key receiving means for receiving, from said guest-side terminal, a guest-side hash key and hash function created at said guest-side terminal and encrypted with said public key; host-side common key creating means for creating a host-side common key used for encrypting said contents according to a common key encryption scheme, and storing said host-side common key and encryption scheme to host-side common key storage means; host-side common key encrypting means for encrypting said created host-side common key and encryption scheme with said public key stored in said host-side public key and certificate storage means; host-side common key transmitting means for transmitting to said web server said encrypted host-side common key and encryption scheme, as well as said encrypted guest-side hash key and hash function received by said host-side key receiving means; host-side content receiving means for transmitting said content send request to said web server and receiving the digest and contents encrypted by said host-side common key transmitted from said web server; host-side contents decrypting means for decrypting said received encrypted digest and contents with said host-side common key stored in said host-side common key storage means, and storing thus decrypted contents to the host-side content storage means; host-side content and digest transmitting means for transmitting said decrypted digest and contents to said guest-side terminal through said session server; and host-side content acquiring means for acquiring and displaying the contents stored in said host-side content storage means; and said guest-side terminal comprises: guest-side public key and certificate receiving means for receiving said server certificate and said public key from said host-side terminal for storage in guest-side public key and certificate storage means; guest-side hash key creating means for creating a guest-side hash key for generating a digest of said contents by a hash function, and storing said guest-side hash key and hash function to said guest-side hash key storage means; guest-side hash key encrypting means for encrypting said created guest-side hash key and hash function with said public key stored in said guest-side public key and certificate storage means; guest-side hash key transmitting means for transmitting said encrypted guest-side hash key and hash function to said host-side terminal through said session server; guest-side digest receiving means for receiving said decrypted digest from said host-side terminal; guest-side content transmitting and receiving means for receiving said decrypted contents from said host-side terminal for storage in a guest-side content storage means; guest-side digest comparing means for creating, from said received contents, a digest on the basis of a guest-side hash key and hash function to be stored in said guest-side hash key storage means, comparing thus created digest with the digest received by said guest-side digest means, and authenticating the contents as valid when the comparison produces a match; and guest-side content acquiring means for acquiring and displaying the contents stored in said guest-side content storage means when said valid contents are authenticated.

The data communication method described above can be implemented as a data communication system by using such an arrangement.

The invention in accordance with Claim 6 provides a data communication system used in a web server when a synchronization processing of contents stored on said web server is performed between a host-side terminal capable of encrypting communication through at least one or more session servers and at least one or more guest-side terminals, said data communication system used in said web server comprising: public key and certificate transmitting means for transmitting, to said host-side terminal, a server certificate and public key stored in key and certificate storage means; common key receiving means for receiving, from said host-side terminal, a host-side common key and encryption scheme created by said host-side terminal and encrypted by said public key, as well as a guest-side hash key created by said guest-side terminal and encrypted by said public key and a hash function thereof; common key decrypting means for decrypting said encrypted host-side common key and an encrypting scheme thereof, as well as said encrypted guest-side hash key and a hash function thereof, with the private key stored in said public key and certificate storage means; encrypting means for extracting, from server-side content storage means for storing said contents, the contents corresponding to the content send request received by said web server from said host-side terminal, creating a digest of said contents on the basis of said decrypted guest-side hash key and hash function, and encrypting said created digest and said contents on the basis of said decrypted host-side common key and encryption scheme; and server-side content transmitting means for receiving the send request of said contents from said host-side terminal, and transmitting the digest and contents encrypted by said encrypting means to said host-side terminal, wherein, at said host-side terminal, the encrypted digest and contents received from said web server are decrypted with said host-side common key created by said host-side terminal; said decrypted digest and contents are transmitted to said guest-side terminal through said session server; and said contents are displayed on said host-side terminal, and wherein, at said guest-side terminal, said decrypted digest and contents are received from said host-side terminal; a digest is created from said received contents on the basis of said created guest-side hash key and hash function; and the digest and the received digest are compared and the contents are displayed on the guest-side terminal when the comparison produces a match.

The data communication system of the web server in the data communication system data structure is preferably arranged as in the present invention.

The invention in accordance with Claim 7 provides a data communication system at a host-side when a synchronization processing of contents stored on a web server is performed between a host-side terminal capable of encrypting communication through at least one or more session servers and at least one or more guest-side terminals, said data communication system used by said host-side terminal comprising: host-side public key and certificate receiving means for receiving a server certificate and said public key from said web server for storage in host-side public key and certificate storage means; public key and certificate transferring means for transferring said received server certificate and said public key to said guest-side terminal; host-side key receiving means for receiving, from said guest-side terminal, a guest-side hash key created at said guest-side terminal and encrypted with said public key and a hash function thereof, host-side common key creating means for creating a host-side common key used for encrypting said contents according to a common key encryption scheme, and storing said host-side common key and encryption scheme to host-side common key storage means; host-side common key encrypting means for encrypting said created host-side common key and an encrypting scheme thereof with said public key stored in said host-side public key and certificate storage means; host-side common key transmitting means for transmitting, to said web server, said encrypted host-side common key and encryption scheme, as well as said encrypted guest-side hash key received by said host-side key receiving means, and a hash function thereof; host-side content receiving means for transmitting a content send request to said web server, and receiving from said web server the digest and contents thereof created using said guest-side hash key and said hash function and encrypted by said host-side common key in said web server; host-side contents decrypting means for decrypting said received encrypted digest and contents thereof with said host-side common key stored in said host-side common key storage means, and storing thus decrypted contents in a host-side content storage means; host-side content and digest transmitting means for transmitting said decrypted digest and contents thereof to said guest-side terminal through said session server; and host-side content acquiring means for acquiring and displaying the contents stored in said host-side content storage means, wherein, at said guest-side terminal, said decrypted digest and contents thereof are received from said host-side terminal; said digest is created from said received contents on the basis of said created guest-side hash key and said hash function; and the digest and said received digest are compared and said contents are displayed on said guest-side terminal when the comparison produces a match.

The data communication system of the host-side terminal in the data communication system described above is preferably arranged as in the present invention.

### EFFECT OF THE INVENTION

In accordance with the present invention, secure data communication can be executed upon authenticating a web server as a valid server even when a synchronization processing is executed among a plurality of computer terminals.

### BRIEF DESCRIPTION OF THE DRAWINGS

Fig. 1 is a schematic diagram of the overall system configuration;
Fig. 2 is a system block diagram showing an example of the system configuration of a web server;
Fig. 3 is a system block diagram showing an example of the system configuration of a host-side terminal;
Fig. 4 is a system block diagram showing an example of the system configuration of a guest-side terminal;
Fig. 5 is a schematic diagram illustrating an overview of a process for using keys when the synchronization processing is executed;
Fig. 6 is a flowchart illustrating the detailed process for sending a content send request from the host-side terminal;
Fig. 7 is a flowchart illustrating the detailed process for sending a content send request from the host-side terminal;
Fig. 8 is a flowchart illustrating the detailed process for sending a content send request from the host-side terminal; and
Fig. 9 is a flowchart illustrating the detailed process for sending a content send request from the guest-side terminal.

### REFERENCE NUMERALS

- 1: web server
- 2: host-side terminal
- 3: guest-side terminal
- 4: session server
- 4a: first session server
- 4b: second session server
- 10: key and certificate storage means
- 11: public key and certificate transmitting means
- 12: common key receiving means
- 13: common key decrypting means
- 14: encrypting means
- 15: server-side content storage means
- 16: server-side content transmitting means
- 20: host-side public key and certificate receiving means
- 21: host-side public key and certificate storage means
- 22: public key and certificate transferring means
- 23: host-side key receiving means
- 24: host-side common key creating means
- 25: host-side common key storage means
- 26: host-side common key encrypting means
- 27: host-side common key transmitting means
- 28: host-side content receiving means
- 29: host-side contents decrypting means
- 30: host-side content storage means
- 31: host-side content and digest transmitting means
- 32: host-side content acquiring means
- 33: host-side update means
- 40: guest-side public key and certificate receiving means
- 41: guest-side public key and certificate storage means
- 42: guest-side hash key creating means
- 43: guest-side hash key storage means
- 44: guest-side hash key encrypting means
- 45: guest-side hash key transmitting means
- 46: guest-side content transmitting and receiving means
- 47: guest-side digest receiving means
- 48: guest-side digest comparing means
- 49: guest-side content storage means
- 50: guest-side content acquiring means
- 51: guest-side update means

### BEST MODE FOR CARRYING OUT THE INVENTION

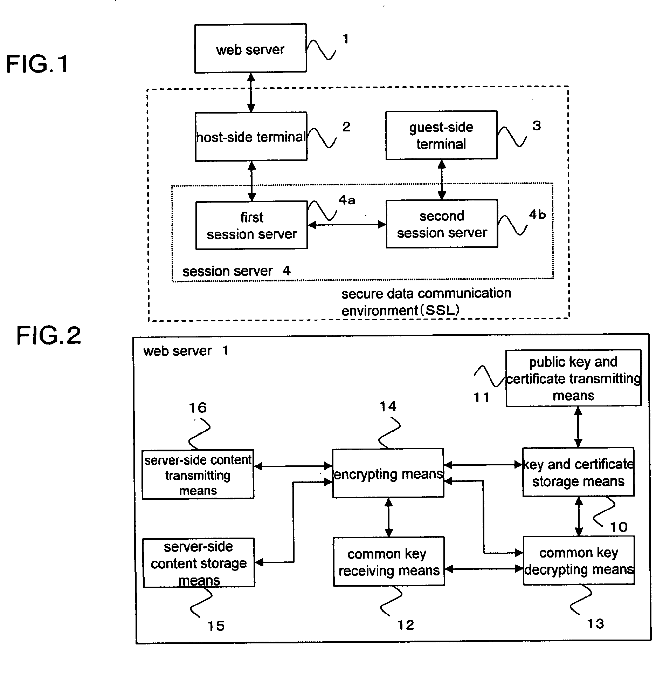

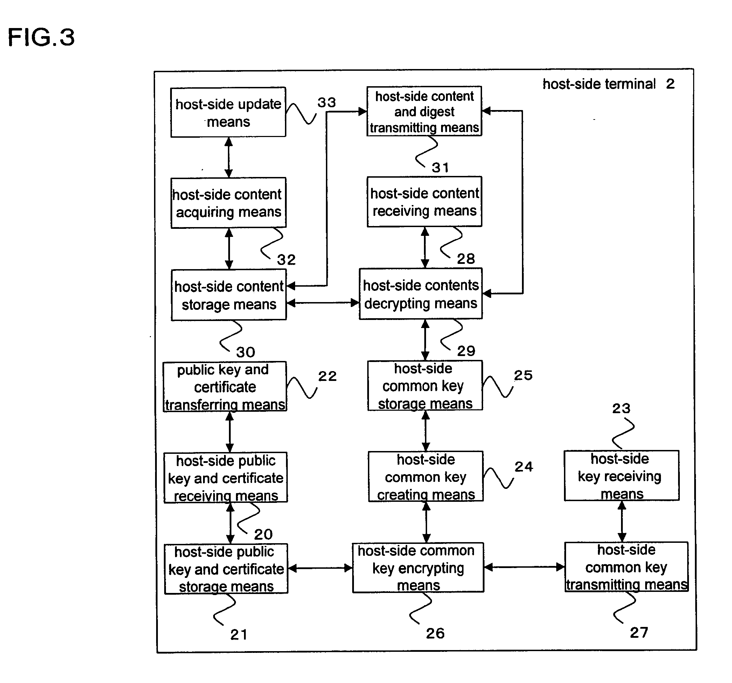

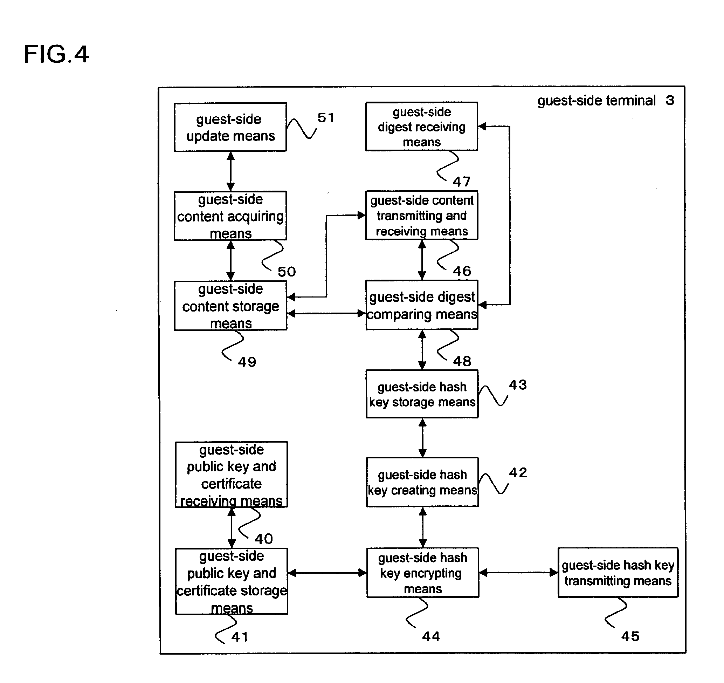

Fig. 1 is an example of the entire system configuration in accordance with the present invention, Fig. 2 shows the system configuration of the web server 1, Fig. 3 shows the system configuration of the host-side terminal 2, and Fig. 4 shows the system configuration of the guest-side terminal 3.

The web server 1 is a server for sending the contents in response to a content send request from the host-side terminal 2.

The host-side terminal 2 and the guest-side terminal 3 are terminals for executing the synchronization processing through a session server 4. The host-side terminal 2 transmits to the web server 1 a content send request, and receives the contents from the web server 1. The thus received contents are transmitted to the guest-side terminal 3 through the session server 4. The guest-side terminal 3 is a terminal which receives the contents stored and displayed on the host-side terminal 2 from the host-side terminal 2 through the session server 4, and forms a display on the guest-side terminal 3 to achieve the synchronization processing.

In the present specification, although the functions of the host-side terminal 2 and the guest-side terminal 3 are each depicted as different terminals in order to better understand the processes, in actual practice it is preferable that the functions of both the host-side terminal 2 and the guest-side terminal 3 be both provided to a computer terminal for executing the synchronization processing, and either the host-side terminal 2 or the guest-side terminal 3 be used according to the actual aspect. In this case, overlapping functions in the host-side terminal 2 and the guest-side terminal 3 can be unified.

The session server 4 is a computer terminal for establishing a session between the host-side terminal 2 and the guest-side terminal 3 after accepting a connection request from the host-side terminal 2 and the guest-side terminal 3 and after these terminals have logged on (although the server is referred to in the present specification as a session server 4, the machine may not be a server but a conventional computer terminal or a computer device (for example, a router or a hub)). In the present specification, the session server 4 for establishing a session with the host-side terminal 2 is referred to as a first session server 4a, the session server 4 for establishing a session with the guest-side terminal 3 is referred to as a second session server 4b, and a session is further established between the first session server 4a and the second session server 4b to complete the session between the host-side terminal 2 and the guest-side terminal 3. However, the host-side terminal 2 and the guest-side terminal 3 may establish a session on the same session server 4 as well.

The sessions between the host-side terminal 2 and the first session server 4a, between the guest-side terminal 3 and the second session server 4b, and between the first session server 4a and the second session server 4b are established by known secure communication such as SSL Although this may not be expressly stated, the data exchanged with the host-side terminal 2 and the guest-side terminal 3 in the synchronization processing is exchanged by secure communication such as SSL between the host-side terminal 2 and the guest-side terminal 3 through the first session server 4a and the second session server 4b. Therefore, although this may not be expressly stated, the phrase "transmitting data from the host-side terminal 2 to the guest-side terminal 3" or "transmitting data from the guest-side terminal 3 to the host-side terminal 2" indicates that data is exchanged by secure communication (such as SSL) between the host-side terminal 2 and the guest-side terminal 3, and is substantially encrypted.

The web server 1 has a key and certificate storage means 10, a public key and certificate transmitting means 11, a common key receiving means 12, a common key decrypting means 13, an encrypting means 14, a server-side content storage means 15, and a server-side content transmitting means 16.

The key and certificate storage means 10 is a means for storing the server certificate for authenticating the validity of the web server 1, and storing the public key and private key used by the web server 1.

The public key and certificate transmitting means 11 is a means for sending to the host-side terminal 2 the server certificate and the public key stored in the key and certificate storage means 10.

The common key receiving means 12 is a means for receiving from the host-side terminal 2 a host-side common key created by the host-side terminal 2 and encrypted by the public key and encryption scheme, as well as a guest-side hash key created by the guest-side terminal 3 and encrypted by the public key and a hash function thereof. In the present specification, the encryption scheme and the hash function are such that, rather than sending or receiving the algorithm itself, an identifier for identifying the algorithm is sent by the host-side terminal 2 and received by the common key receiving means 12.

The common key decrypting means 13 is a means in which the host-side common key received by the common key receiving means 12 and encrypted by a public key, as well as the guest-side hash key encrypted by a public key, are decrypted with a private key that corresponds to the public key and stored in the key and certificate storage means 10 to obtain a plain-text host-side common key and an encryption scheme thereof, as well as a plain-text guest-side hash key and hash function.

The server-side content storage means 15 is a means for storing the contents to be displayed on the host-side terminal 2 and the guest-side terminal 3. The contents include text data, image data, audio data, and other types of data. A typical example of such contents is the contents of a web site.

The encrypting means 14 is a means whereby the web server 1 extracts, from the server-side content storage means 15, the contents that correspond to the content send request received from the host-side terminal 2, a digest of the contents is created based on the guest-side hash key decrypted by the common key decrypting means 13 and a hash function thereof, and the contents and the digest of the contents are encrypted based on the host-side common key and encryption scheme. The digest is the data of fixed size created by applying a unidirectional function such as a keyed hash function (HMAC-MD5, HMAC-SHA1, or the like) to an arbitrary amount of data.

The server-side content transmitting means 16 is a means whereby the contents and the digest encrypted with the host-side common key in the encrypting means 14 are transmitted to the host-side terminal 2.

The host-side terminal 2 has a host-side public key and certificate receiving means 20, a host-side public key and certificate storage means 21, a public key and certificate transferring means 22, a host-side key receiving means 23, a host-side common key creating means 24, a host-side common key storage means 25, a host-side common key encrypting means 26, a host-side common key transmitting means 27, a host-side content receiving means 28, a host-side contents decrypting means 29, a host-side content storage means 30, a host-side content and digest transmitting means 31, a host-side content acquiring means 32, and a host-side update means 33.

The host-side public key and certificate receiving means 20 is a means for receiving the server certificate and the public key of the web server 1, which are transmitted by the public key and certificate transmitting means 11 of the web server 1 to the host-side terminal 2.

The host-side public key and certificate storage means 21 is a means for storing the server certificate and the public key, which are received by the host-side public key and certificate receiving means 20.

The public key and certificate transferring means 22 is a means whereby the certificate and the public key of the web server 1, which are received by the host-side public key and certificate receiving means 20, are transmitted to the guest-side terminal 3 through a session server 4 (first session server 4a, second session server 4b).

The host-side key receiving means 23 is a means whereby the guest-side hash key created by the guest-side terminal 3 and encrypted with the public key, as well as a hash function thereof, is received from the guest-side terminal 3 through a session server 4 (first session server 4a, second session server 4b).

The host-side common key creating means 24 is a means for creating a host-side common key used when the contents transmitted from the web server 1 are encrypted by a known common key encryption scheme (for example, DES, Triple-DES, RC4, RC2, IDEA, or the like).

The host-side common key storage means 25 is a means for storing the host-side common key and encryption scheme created by the host-side common key creating means 24.

The host-side common key encrypting means 26 is a means whereby the host-side common key and encryption scheme created by the host-side common key creating means 24 are encrypted by the public key of the web server 1, received from the web server 1, and stored in the host-side public key and certificate storage means 21.

The host-side common key transmitting means 27 is a means whereby the encrypted guest-side hash key and hash function received by the host-side key receiving means 23 from the guest-side terminal 3, as well as the host-side common key and encryption scheme encrypted by the host-side common key encrypting means 26, are transmitted to the web server 1.

The host-side content acquiring means 32 is a means for obtaining the contents from the host-side content storage means 30 (described later) upon receipt of a content display request (for example, the input of a URL or the selection of a link) from a user, and displaying the contents on the host-side terminal 2 by means of a known display means such as a web browser.

The host-side content acquiring means 32 also is a means for obtaining the contents from the host-side content storage means 30 upon receipt of a content update event (described later) from the host-side update means 33 (described later), and displaying the contents on the host-side terminal 2 by means of a known display means such as a web browser.

The host-side content receiving means 28 is a means whereby a content send request for acquiring the contents from the web server 1 is transmitted to the web server 1 in cases in which the contents requested by the host-side content acquiring means 32 are not present in the host-side content storage means 30, and the contents and digest encrypted by the host-side common key are received from the web server 1.

The host-side update means 33 is a means for notifying the host-side content acquiring means 32 and the guest-side terminal 3 of a content update event indicating that new contents have been stored when the host-side content storage means 30 has stored the new contents. It is also a means for receiving the content update event from the guest-side terminal 3 and notifying the host-side content acquiring means 32 that the event has been received. The content update event may include, in addition to the fact that the contents are updated, information indicating the location of the contents, such as a URL or the location of files.

The host-side contents decrypting means 29 is a means whereby the contents and digest received from the web server 1 and encrypted by the host-side common key are decrypted according to the encryption scheme by using the host-side common key stored in the host-side common key storage means 25, and the thus decrypted contents are stored in the host-side content storage means 30.

The host-side content storage means 30 is a means for storing the contents decrypted by the host-side contents decrypting means 29.

The host-side content and digest transmitting means 31 is a means whereby the contents stored in the host-side content storage means 30 and the digest decrypted by the host-side contents decrypting means 29 are transmitted to the guest-side terminal 3 through a session server 4 (first session server 4a, second session server 4b). It is also a means for extracting the contents from the host-side content storage means 30 upon receipt of a content send request from the guest-side terminal 3, and transmitting the contents to the guest-side terminal 3.

The guest-side terminal 3 has a guest-side public key and certificate receiving means 40, a guest-side public key and certificate storage means 41, a guest-side hash key creating means 42, a guest-side hash key storage means 43, a guest-side hash key encrypting means 44, a guest-side hash key transmitting means 45, a guest-side content transmitting and receiving means 46, a guest-side digest receiving means 47, a guest-side digest comparing means 48, a guest-side content storage means 49, a guest-side content acquiring means 50, and a guest-side update means 51.

The guest-side public key and certificate receiving means 40 is a means for receiving the server certificate and public key of the web server 1 that have been transmitted by the public key and certificate transferring means 22 of the host-side terminal 2 to the guest-side terminal 3 through a session server 4 (first session server 4a, second session server 4b).

The guest-side public key and certificate storage means 41 is a means for storing the server certificate and public key received by the guest-side public key and certificate receiving means 40.

The guest-side hash key creating means 42 is a means for creating a guest-side hash key used by a keyed hash function for creating the digest of contents (in the present specification, the keyed hash function is referred to simply as a hash function, examples of which include HMAC-MD5 and HMAC-SHA1).

The guest-side hash key storage means 43 is a means for storing the guest-side hash key and hash function created by the guest-side hash key creating means 42.

The guest-side hash key encrypting means 44 is a means whereby the guest-side hash key and hash function created by the guest-side hash key creating means 42 is encrypted by the public key of the web server 1, which key is received from the host-side terminal 2 and stored in the guest-side public key and certificate storage means 41.

The guest-side hash key transmitting means 45 is a means whereby the guest-side hash key encrypted by the guest-side hash key encrypting means 44 and a hash function thereof is transmitted to the host-side terminal 2 through a session server 4 (first session server 4a, second session server 4b).

The guest-side content acquiring means 50 is a means for acquiring the contents from the guest-side content storage means 49 (described later) upon receipt of a content display request (for example, the input of a URL or the selection of a link) from a user, and displaying the contents on the guest-side terminal 3 by a known display means such as a web browser.

The guest-side content acquiring means 50 is a means for acquiring the contents from the guest-side content storage means 49 upon receipt of a content update event from the guest-side update means 51 (described later), and displaying the contents by means of a known display means such as a web browser. Preferably at the time the contents are displayed, the contents not authenticated by the guest-side digest comparing means 48 described later will not be displayed, or will be displayed while the user is notified of a possible unauthorized change.

The guest-side content transmitting and receiving means 46 is a means for transmitting a content acquisition request to the host-side terminal 2 in a session in which the contents requested by the guest-side content acquiring means 50 are not present in the guest-side content storage means 49, receiving from the host-side terminal 2 the contents acquired from the web server 1 by the host-side terminal 2 and stored in the host-side content storage means 30, and storing the contents in the guest-side content storage means 49.

The guest-side update means 51 is a means for notifying the guest-side content acquiring means 50 of a content update event indicating that new contents have been stored to the guest-side content acquiring means 50 when the guest-side content storage means 49 has stored new contents. It is also a means for receiving the content update event from the host-side terminal 2 and notifying the guest-side content acquiring means 50 of the event

The guest-side digest receiving means 47 is a means for receiving the digest transmitted by the host-side content and digest transmitting means 31 of the host-side terminal 2.

The guest-side digest comparing means 48 is a means for creating a digest based on the guest-side hash key and hash function stored in the guest-side hash key storage means 43 from the contents received by the guest-side content transmitting and receiving means 46, comparing the thus created digest with the digest received by the guest-side digest receiving means 47 from the host-side terminal 2, and, if matched, authenticating as valid contents (contents to which no unauthorized changes have been made) the contents received by the guest-side content transmitting and receiving means 46 and stored in the guest-side content storage means 49.

The guest-side content storage means 49 is a means for storing the contents received by the guest-side content transmitting and receiving means 46.

### FIRST EMBODIMENT

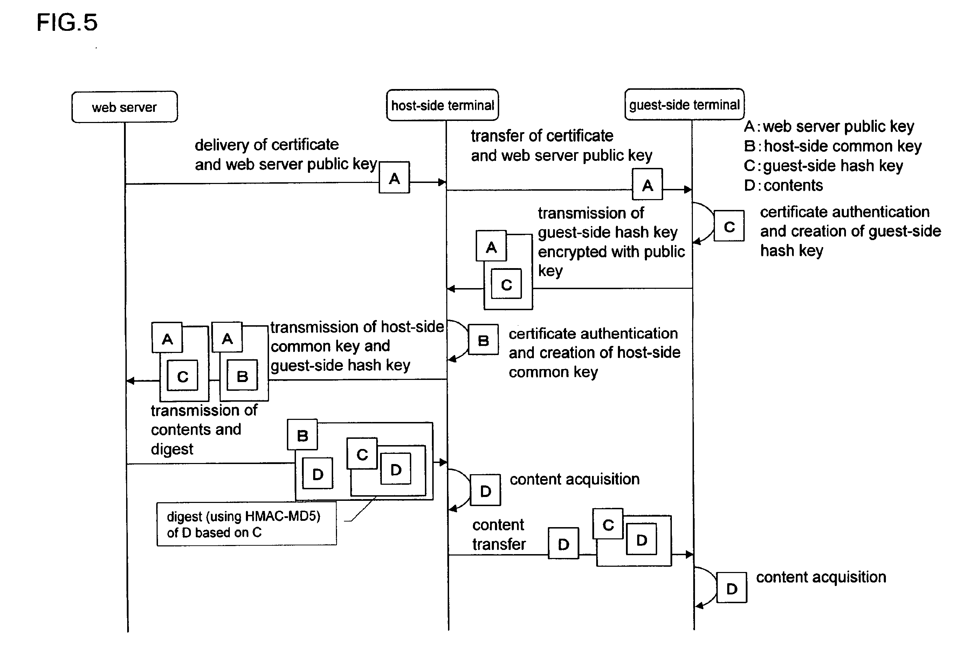

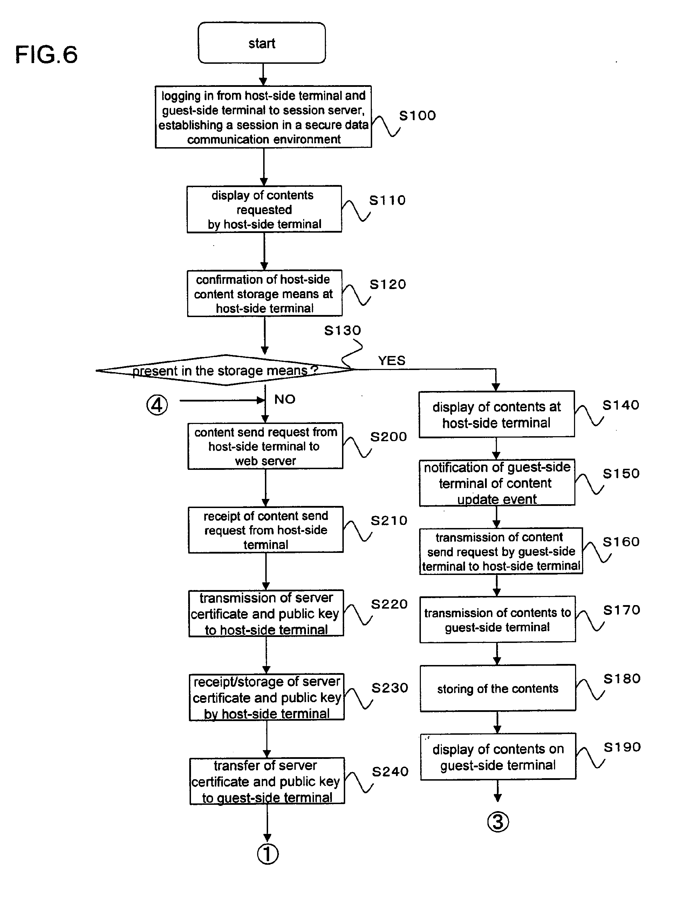

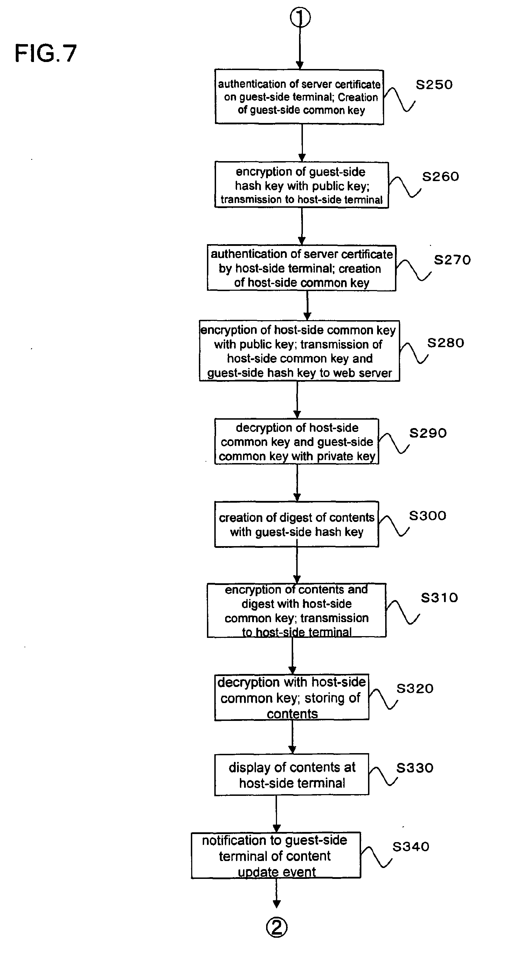

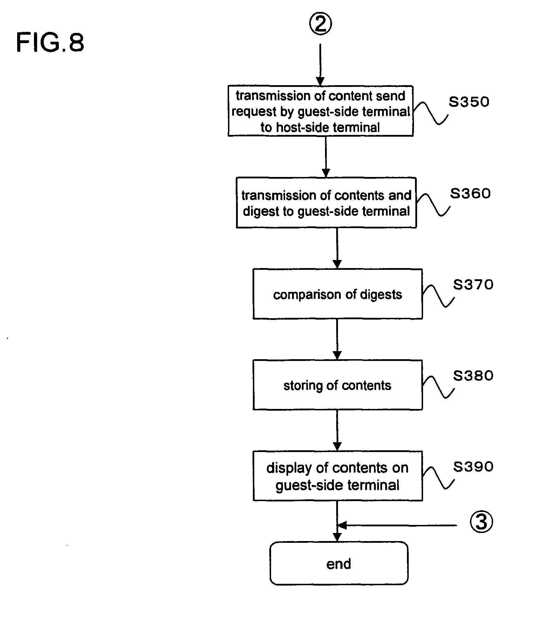

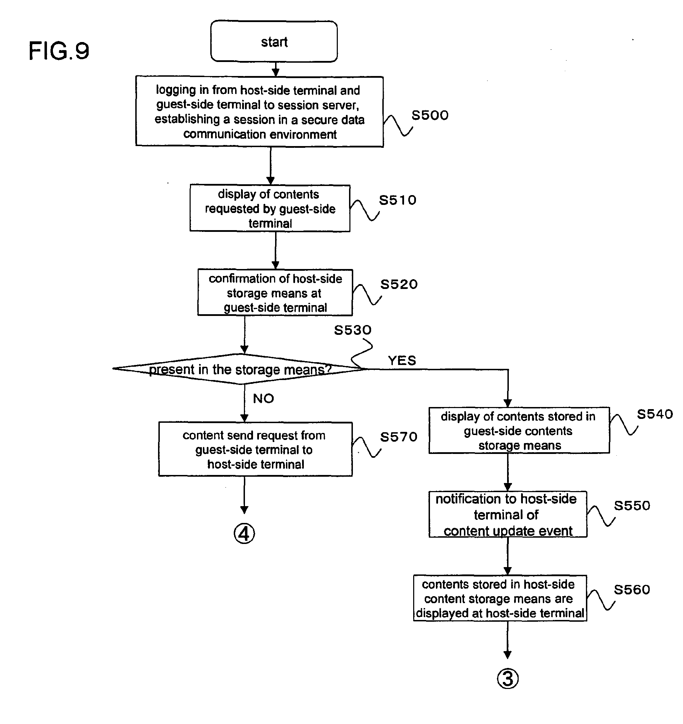

An example of a process flow in accordance with the present invention will be described in greater detail with reference to the schematic diagram of Fig. 5, the flowcharts shown in Fig. 6 to Fig. 9, and the schematic diagrams of Fig. 1 to Fig. 4.

A case will first be described in which the host-side terminal 2 transmits a content display request to the web server 1 while executing the synchronization processing between the host-side terminal 2 and the guest-side terminal 3.

To perform synchronization, users of the host-side terminal 2 and the guest-side terminal 3 both log in to the session server 4 from their respective terminals, and establish a session with the session server 4 so that the host-side terminal 2 is the host side of the synchronization processing, and the guest-side terminal 3 is the guest side of the synchronization processing (S100). More specifically, the host-side terminal 2 establishes a session with the first session server 4a, the guest-side terminal 3 establishes a session with the second session server 4b, and a third session is established between the first session server 4a and the second session server 4b, whereby a session is established between the host-side terminal 2 and the guest-side terminal 3.

The session in step S100 is established, e.g., in a secure data communication environment such as SSL More specifically, the data communication between the host-side terminal 2 and the first session server 4a, between the guest-side terminal 3 and the second session server 4b, and between the first session server 4a and the second session server 4b uses SSL, whereby a secure data communication environment is established between the host-side terminal 2 and the guest-side terminal 3.

The user of the host-side terminal 2 inputs, e.g., a URL or select a link to request the contents of the URL or the link to be displayed (S110). The content display request causes the host-side content acquiring means 32 of the host-side terminal 2 to confirm whether the contents corresponding to the URL or the link are stored in the host-side content storage means 30 of the host-side terminal 2 (S120).

If the designated contents are present in the host-side content storage means 30 (S130), the host-side content acquiring means 32 of the host-side terminal 2 acquires the contents from the host-side content storage means 30 and displays the contents on the host-side terminal 2 by means of a web browser and the like (S140).

The host-side update means 33 of the host-side terminal 2 notifies the guest-side terminal 3 through a session server 4 (first session server 4a, second session server 4b) of a content update event because the contents to be displayed on the host-side terminal 2 have been changed (S150).

The guest-side update means 51 of the guest-side terminal 3 that has received the notification of the content update event from the host-side terminal 2 notifies the guest-side content acquiring means 50 of the guest-side terminal 3 of the content update event

The guest-side content acquiring means 50 of the guest-side terminal 3 confirms whether the contents are stored in the guest-side content storage means 49. If the contents are not stored, the guest-side content transmitting and receiving means 46 transmits a content send request requesting the host-side content and digest transmitting means 31 of the host-side terminal 2 to send the contents through a session server 4 (first session server 4a, second session server 4b) (S160). If it is determined as a result of the aforementioned confirmation that the contents are stored, the contents stored in the guest-side content storage means 49 may be displayed on the guest-side terminal 3 without sending a content send request to the host-side terminal 2.

The host-side content and digest transmitting means 31 of the host-side terminal 2, having received the content send request, extracts the contents from the host-side content storage means 30, and transmits the contents to the guest-side terminal 3 through a session server 4 (first session server 4a, second session server 4b) (S170).

The contents are stored in the guest-side content storage means 49 when the contents are received by the guest-side content transmitting and receiving means 46 from the host-side content and digest transmitting means 31 of the host-side terminal 2 through a session server 4 (first session server 4a, second session server 4b) (S180). The guest-side content acquiring means 50 of the guest-side terminal 3 acquires the contents from the guest-side content storage means 49, and displays the contents on the guest-side terminal 3 by means of a web browser and the like (S190). The synchronization processing is thereby executed between the host-side terminal 2 and the guest-side terminal 3 in cases in which the contents are stored in the host-side content storage means 30 in step S130.

In cases in which the result of the confirmation in step S120 is that the contents are not stored in the host-side content storage means 30 (S130), the host-side content receiving means 28 of the host-side terminal 2 sends a content send request (S200) to the web server 1 that corresponds to the URL or the link from the host-side terminal 2.

The content send request from the host-side terminal 2 is received by the server-side content transmitting means 16 of the web server 1 (S210), whereby secure communication is established between the web server 1 and the host-side terminal 2 (as well as the guest-side terminal 3), the public key and certificate transmitting means 11 of the web server 1 extracts a server certificate and a public key stored in the key and certificate storage means 10 in order to authenticate the transmission of the contents from the valid web server 1, and the certificate and the key are sent to the host-side terminal 2 (S220).

The server certificate and the public key that have been sent from the public key and certificate transmitting means 11 of the web server 1 are received by the host-side public key and certificate receiving means 20 of the host-side terminal 2, and are stored in the host-side public key and certificate storage means 21 (S230). At the same time, the server certificate and the public key that have been received by the host-side public key and certificate receiving means 20 are transferred by the public key and certificate transferring means 22 to the guest-side terminal 3 through a session server 4 (first session server 4a, second session server 4b) (S240).

The guest-side public key and certificate receiving means 40 of the guest-side terminal 3 receives the server certificate and the public key transferred from the host-side terminal 2, stores the certificate and the key in the guest-side public key and certificate storage means 41, authenticates the server certificate, and confirms the validity of the server. Then the guest-side hash key creating means 42 creates a guest-side hash key for creating a digest of the contents sent from the web server 1 (S250), and stores the guest-side hash key and the hash function in the guest-side hash key storage means 43.

The guest-side hash key and the hash function created in the guest-side hash key creating means 42 are encrypted with the public key of the web server 1 stored in the guest-side public key and certificate storage means 41 by the guest-side hash key encrypting means 44, and the guest-side hash key transmitting means 45 transmits the guest-side hash key and the hash function encrypted by the public key to the host-side terminal 2 through a session server 4 (first session server 4a, second session server 4b) (S260).

The host-side key receiving means 23 of the host-side terminal 2 receives the guest-side hash key and the hash function encrypted with the public key and transmitted from the guest-side terminal 3. The host-side public key and certificate receiving means 20 authenticates the server certificate stored in the host-side public key and certificate storage means 21 and confirms the validity of the server. Then, the host-side common key creating means 24 creates the host-side common key for encrypting the contents to be sent from the web server 1, and stores the host-side common key and the encryption scheme in the host-side common key storage means 25 (S270).

The host-side common key and encryption scheme created in the host-side common key creating means 24 are encrypted with the public key of the web server 1 stored in the host-side public key and certificate storage means 21 by the host-side common key encrypting means 26, and the host-side common key transmitting means 27 transmits the host-side common key and encryption scheme encrypted with the public key, as well as the guest-side hash key and hash function encrypted by the public key received by the host-side key receiving means 23, to the web server 1 (S280). The steps S230 to S280 may also be executed simultaneously and in parallel in the host-side terminal 2 and the guest-side terminal 3.

The host-side common key and encryption scheme encrypted with the public key, as well as the guest-side hash key and hash function encrypted with the public key, are received by the common key receiving means 12 of the web server 1, and the common key decrypting means 13 of the web server 1 decrypts these items with the private key that corresponds to the public key and is stored in the key and certificate storage means 10 (S290) to obtain a plain-text host-side common key and encryption scheme, as well as a plain-text guest-side hash key and hash function.

The encrypting means 14 of the web server 1 that has acquired the common keys extracts, from the server-side content storage means 15, contents that correspond to the content send request received by the web server 1 from the host-side terminal 2 in step S210, and creates a digest of the contents by using the guest-side hash key and hash function decrypted in the common key decrypting means 13 (S300). The encrypting means 14 further encrypts the contents and the digest of the contents with the host-side common key, and the server-side content transmitting means 16 transmits these items to the host-side terminal 2 (S310).

Once the host-side content receiving means 28 of the host-side terminal 2 receives from the web server 1 the contents and digest encrypted with the host-side common key, the host-side contents decrypting means 29 decrypts the contents and the digest on the basis of the host-side common key stored in the host-side common key storage means 25, and stores the plain text version of the contents to the host-side content storage means 30.

After storing the contents to host-side content storage means 30 in step S320, the host-side content acquiring means 32 of the host-side terminal 2 acquires the contents from the host-side content storage means 30 and displays the contents on the host-side terminal 2 by using a web browser (S330).

Since the new contents are displayed in this manner, the host-side update means 33 notifies the guest-side terminal 3 through a session server 4 (first session server 4a, second session server 4b) of a content update event (S340).

The guest-side update means 51 of the guest-side terminal 3, which has received the notification of the content update event from the host-side terminal 2, notifies the guest-side content acquiring means 50 of the content update event. The guest-side content acquiring means 50 confirms whether the contents are stored in the guest-side content storage means 49. Since the contents are not stored (the host-side terminal 2 has received the contents from the web server 1, and the guest-side terminal 3 therefore does not store these contents), the guest-side content transmitting and receiving means 46 transmits a send request for the contents to the host-side content and digest transmitting means 31 of the host-side terminal 2 through a session server 4 (first session server 4a, second session server 4b) (S350).

The host-side content and digest transmitting means 31 of the host-side terminal 2, which has received the content send request from the guest-side content transmitting and receiving means 46 of the guest-side terminal 3 through a session server 4 (first session server 4a, second session server 4b), extracts the contents from the host-side content storage means 30 of the host-side terminal 2. The host-side content and digest transmitting means 31 transmits the extracted contents, as well as the digest of the contents decrypted by the host-side contents decrypting means 29 in step S320, to the guest-side terminal 3 through a session server 4 (first session server 4a, second session server 4b) (S360).

The guest-side digest receiving means 47 of the guest-side terminal 3 receives the digest transmitted from the host-side content and digest transmitting means 31 of the host-side terminal 2, and the guest-side content transmitting and receiving means 46 receives the contents sent from the host-side content and digest transmitting means 31 of the host-side terminal 2.

The guest-side digest comparing means 48 creates, based on the guest-side hash key and hash function stored in the guest-side hash key storage means 43, a digest from the contents received by the guest-side content transmitting and receiving means 46, and compares this digest and the digest received by the guest-side digest receiving means 47. In cases in which a match is produced, the contents that are received by the guest-side content transmitting and receiving means 46 and stored in the guest-side content storage means 49 are authenticated as valid contents (contents to which no unauthorized changes have been made) (S370). In cases in which an authentication is made in step S370, the guest-side content transmitting and receiving means 46 stores the contents received from the host-side terminal 2 in the guest-side content storage means 49 (S380) .

Once the contents have thus been stored in the guest-side content storage means 49, the guest-side content acquiring means 50 acquires the contents from the guest-side content storage means 49 and displays the contents on the guest-side terminal 3 by using a web browser or the like (S390). An approach may be adopted in which the guest-side content transmitting and receiving means 46 first stores the contents in the guest-side content storage means 49, the guest-side content acquiring means 50 displays the contents in cases in which the contents are authenticated by the guest-side digest comparing means 48, and the guest-side content acquiring means 50 does not display the contents or creates a display after notifying the user of a possible unauthorized change of the contents in cases in which the contents cannot be authenticated.

By executing the process as have been described above, the guest-side terminal 3 can receive the contents in a secure mode after authenticating the web server 1 as being an authentic server, and a synchronization processing cab be executed between the host-side terminal 2 and the guest-side terminal 3.

### SECOND EMBODIMENT

A case will next be described in which a content display request is transmitted to the host-side terminal 2 from the guest-side terminal 3, and the content display request is transmitted by the host-side terminal 2 to the web server 1 when a synchronization processing is executed between the host-side terminal 2 and the guest-side terminal 3.

To run the synchronization processing, each of the users of the host-side terminal 2 and the guest-side terminal 3 logs in from their respective terminal to the session server 4 and establishes a session with the session server 4 by using the host-side terminal 2 as the host side of the synchronization processing, and the guest-side terminal 3 as the guest side of the synchronization processing (S500). More specifically, the host-side terminal 2 establishes a session with the first session server 4a, the guest-side terminal 3 establishes another session with the second session server 4b, and yet another session is established between the first session server 4a and the second session server 4b, whereby the session between the host-side terminal 2 and the guest-side terminal 3 is established.

The session of step S500 is established, e.g., by using a secure data communication environment such as SSL More specifically, the data communication between terminals, i.e., between the host-side terminal 2 and the first session server 4a, between the guest-side terminal 3 and the second session server 4b, and between the first session server 4a and the second session server 4b, is carried out as an SSL session, whereby a secure data communication environment is established between the host-side terminal 2 and the guest-side terminal 3.

The user of the guest-side terminal 3 may, for example, input a URL, or select or otherwise indicate a link to request that the URL or the link be displayed as the contents (S51 0). The content display request causes the guest-side content acquiring means 50 of the guest-side terminal 3 to confirm whether the contents that correspond to the URL or the link are stored in the guest-side content storage means 49 of the guest-side terminal (S520).

In cases in which the contents are present in the guest-side content storage means 49 (S530), the guest-side content acquiring means 50 of the guest-side terminal 3 acquires the contents from the guest-side content storage means 49, and displays the contents on the guest-side terminal 3 by means of a web browser or the like (S540).

The guest-side update means 51 of the guest-side terminal 3 notifies the host-side terminal 2 through a session server 4 (first session server 4a, second session server 4b) of a content update event because the contents displayed on the guest-side terminal 3 have been changed (S550).

The host-side update means 33 of the host-side terminal 2 that has received the notification of the content update event from the guest-side terminal 3 issues a notification to the host-side content acquiring means 32 of the host-side terminal 2 about the content update event.

The host-side content acquiring means 32 of the host-side terminal 2 confirms whether the contents are stored in the host-side content storage means 30, and because the contents are stored in this case (since the synchronization processing is running between the host-side terminal 2 and the guest-side terminal 3, the contents stored in the guest-side terminal 3 are also stored in the host-side terminal 2), the contents stored in the host-side content storage means 30 are displayed on the host-side terminal 2 by means of a web browser and the like without transmission of the content send request to the web server 1 (S560). The synchronization processing can thus be carried out between the host-side terminal 2 and the guest-side terminal 3 in cases in which the contents are stored in the guest-side content storage means 49 in step S530.

In cases in which the result of the confirmation in step S520 is that the contents are not stored in the guest-side content storage means 49 (S530), the guest-side content transmitting and receiving means 46 of the guest-side terminal 3 transmits a content send request to the host-side terminal 2 through a session server 4 (first session server 4a, second session server 4b) (S570).

The host-side content receiving means 28 of the host-side terminal 2 that has received the content send request from the guest-side terminal 3 transmits the content send request to the web server 1 that corresponds to the URL or the link of the contents (S200).

The process from S200 to S390 is subsequently carried out in the same manner as in embodiment 1.

By executing the process as described above, the guest-side terminal 3 authenticates the web server 1 as being the valid server and receives the contents in a secure mode in the same manner as in embodiment 1, allowing the synchronization processing to be executed between the host-side terminal 2 and the guest-side terminal 3 even in cases in which the guest-side terminal 3 sends a content send request.

The means in the present invention are merely classified by their logical function, and may share the same virtual or physical areas.

It is apparent that a storage medium on which the software program for executing the functions of the present embodiments is recorded can be provided to the system, and the computer in the system can read the program stored on the recording medium to implement the invention.

It is also apparent that the program that is read in this case from the recording medium can itself implement the functions of the embodiments described above, and the recording medium on which the program is stored constitutes the invention.

Examples of the recording medium for providing the program include magnetic disks, hard disks, optical disks, magnetooptic disks, magnetic tape, nonvolatile memory cards, and the like.

It is apparent that execution of the program loaded to the computer includes not only cases in which the functions of the above embodiments are implemented, but also cases in which the operating system or the like running on the computer performs all or part of the actual processes on the basis of instructions from the computer, and the functions of the embodiments described above are implemented by these processes.

It is further apparent that cases may also be included in which the program that is read from a recording medium can be written to a nonvolatile or volatile storage means provided to a functional expansion card inserted into the computer or to an functional expansion unit connected to the computer, a processor or the like provided to the functional expansion card or functional expansion unit performs all or part of the actual processes on the basis of instructions from the computer, and the functions of the embodiments described above are implemented by these processes.

### INDUSTRIAL APPLICABILITY

The present invention allows secure data communication to be executed upon authenticating a web server as a valid server even in cases in which a synchronization processing is carried out among a plurality of computer terminals.

## Claims

1. A data communication method executed when a synchronization processing of contents stored on a web server is performed between a host-side terminal capable of encrypted communication through at least one or more session servers, and at least one or more guest-side terminals, wherein:
said host-side terminal,
receives and stores a server certificate and a public key from said web server, and transfers said server certificate and said public key to said guest-side terminal through said session server,
said guest-side terminal,
receives said server certificate and said public key from said host-side terminal and authenticates said server certificate, creats a guest-side hash key for generating a digest of said contents, encrypts said guest-side hash key and a hash function with said public key, and transmits the encrypted key and function to said host-side terminal;
said host-side terminal,
authenticates said received server certificate;
creates a host-side common key for encrypting said contents with a common key encryption scheme;
encrypts said host-side common key and said common key encryption scheme with said public key; and transmits to said web server these encrypted key and method, the encrypted guest-side hash key, and said hash function received from said guest-side terminal;
said web server,
decrypts the encrypted host-side common key and common key encryption scheme received from said host-side terminal, as well as the encrypted said guest-side hash key and said hash function, on the basis of a private key that corresponds to said public key; creates said digest for said contents with said hash function on the basis of said decrypted guest-side hash key; encrypts the thus created digest and said contents with said common key encryption scheme on the basis of said decrypted host-side common key; and transmits the encrypted digest and contents to said host-side terminal;
said host-side terminal,
receives said encrypted digest and said contents from said web server;
decrypts said encrypted digest and contents with said created host-side common key; transmits said decrypted digest and contents to said guest-side terminal through said session server; and displays said contents on said host-side terminal; and
said guest-side terminal,
receives said decrypted digest and contents from said host-side terminal; creates a digest from said received contents on the basis of said created guest-side hash key and hash function; compares the digest with said received digest; and displays said contents on said guest-side terminal if the digests are matched.

2. A data communication method according to Claim 1, wherein the encrypted communication between said host-side terminal and said guest-side terminal is performed by performing encrypted communication between said host-side terminal and said session server and between said guest-side terminal and said session server.

3. A data communication method according to either Claim 1 or 2, wherein the synchronization processing is initiated when the user of said host-side terminal selects said content display request, whereby it is confirmed whether said host-side terminal stores said contents;
if the contents are stored, then said contents are displayed on said host-side terminal and a content update event is notified to said guest-side terminal through said session server, whereby said contents that corresponding to the content send request received from said guest-side terminal is transmitted to said guest-side terminal and the contents on said guest-side terminal that has received the contents;
if not stored, then said content send request is transmitted from said host-side terminal to said web server, whereby said web server transmits said server certificate and public key to said host-side terminal.

4. A data communication method according to any one of Claim 1 through 3, wherein the synchronization processing is initiated when the user of said guest-side terminal selects the display request of said contents, whereby it is confirmed whether said guest-side terminal stores said contents;
if the contents are stored, then said contents are displayed on said guest-side terminal and a content update event is notified to said host-side terminal through said session server, whereby said contents stored at said host-side terminal are displayed on said host-side terminal;
if the contents are not stored, then the send request of said contents is transmitted from said guest-side terminal to said host-side terminal and said host-side terminal that has received the request confirms whether said host-side terminal stores said contents;
if said host-side terminal stores the contents, then
said contents are displayed on said host-side terminal and a content update event said is notified to guest-side terminal through said session server, whereby; said contents corresponding to the content send request received from said guest-side terminal are transmitted to said guest-side terminal and said contents are displayed on said guest-side terminal that has received the contents; and
if said host-side terminal does not store the contents, then a send request of said contents is transmitted from said host-side terminal to said web server, whereby said web server transmits said server certificate and public key to said host-side terminal.

5. A data communication system used when a synchronization processing of contents stored on a web server is performed between a host-side terminal capable of encrypting communication through at least one or more session servers and at least one or more guest-side terminals, wherein:
said web server comprises:
public key and certificate transmitting means for transmitting to said host-side terminal a server certificate and public key stored in key and certificate storing means;
common key receiving means for receiving from said host-side terminal a host-side common key created by said host-side terminal and encrypted by said public key and an encryption scheme thereof, as well as a guest-side hash key created by said guest-side terminal and encrypted by said public key and a hash function thereof;
common key decrypting means for decrypting said encrypted host-side common key and encryption scheme, as well as said encrypted guest-side hash key and hash function, by a private key stored in said public key and certificate storing means;
encrypting means for extracting, from server-side content storage means for storing said contents, the contents corresponding to the content send request received by said web server from said host-side terminal, creating a digest of said contents on the basis of said decrypted guest-side hash key and hash function, and encrypting said created digest and said contents on the basis of said decrypted host-side common key and encryption scheme; and
server-side content transmitting means for receiving the send request of said contents from said host-side terminal and transmitting to said host-side terminal the digest and contents encrypted by said encryption means;
said host-side terminal comprises:
host-side public key and certificate receiving means for receiving said server certificate and said public key from said web server for storage in host-side public key and certificate storage means;
public key and certificate transferring means for transferring said received server certificate and said public key to said guest-side terminal;
host-side key receiving means for receiving, from said guest-side terminal, a guest-side hash key and hash function created at said guest-side terminal and encrypted with said public key;
host-side common key creating means for creating a host-side common key used for encrypting said contents according to a common key encryption scheme, and storing said host-side common key and encryption scheme to host-side common key storage means;
host-side common key encrypting means for encrypting said created host-side common key and encryption scheme with said public key stored in said host-side public key and certificate storage means;
host-side common key transmitting means for transmitting to said web server said encrypted host-side common key and encryption scheme, as well as said encrypted guest-side hash key and hash function received by said host-side key receiving means;
host-side content receiving means for transmitting said content send request to said web server and receiving the digest and contents encrypted by said host-side common key transmitted from said web server,
host-side contents decrypting means for decrypting said received encrypted digest and contents with said host-side common key stored in said host-side common key storage means, and storing thus decrypted contents to the host-side content storage means;
host-side content and digest transmitting means for transmitting said decrypted digest and contents to said guest-side terminal through said session server, and
host-side content acquiring means for acquiring and displaying the contents stored in said host-side content storage means; and
said guest-side terminal comprises:
guest-side public key and certificate receiving means for receiving said server certificate and said public key from said host-side terminal for storage in guest-side public key and certificate storage means;
guest-side hash key creating means for creating a guest-side hash key for generating a digest of said contents by a hash function, and storing said guest-side hash key and hash function to said guest-side hash key storage means;
guest-side hash key encrypting means for encrypting said created guest-side hash key and hash function with said public key stored in said guest-side public key and certificate storage means;
guest-side hash key transmitting means for transmitting said encrypted guest-side hash key and hash function to said host-side terminal through said session server;
guest-side digest receiving means for receiving said decrypted digest from said host-side terminal;
guest-side content transmitting and receiving means for receiving said decrypted contents from said host-side terminal for storage in a guest-side content storage means;
guest-side digest comparing means for creating, from said received contents, a digest on the basis of a guest-side hash key and hash function to be stored in said guest-side hash key storage means, comparing thus created digest with the digest received by said guest-side digest means, and authenticating the contents as valid when the comparison produces a match; and
guest-side content acquiring means for acquiring and displaying the contents stored in said guest-side content storage means when said valid contents are authenticated.

6. A data communication system used in a web server when a synchronization processing of contents stored on said web server is performed between a host-side terminal capable of encrypting communication through at least one or more session servers and at least one or more guest-side terminals, said data communication system used in said web server comprising:
public key and certificate transmitting means for transmitting, to said host-side terminal, a server certificate and public key stored in key and certificate storage means;
common key receiving means for receiving, from said host-side terminal, a host-side common key and encryption scheme created by said host-side terminal and encrypted by said public key, as well as a guest-side hash key created by said guest-side terminal and encrypted by said public key and a hash function thereof;
common key decrypting means for decrypting said encrypted host-side common key and an encrypting scheme thereof, as well as said encrypted guest-side hash key and a hash function thereof, with the private key stored in said public key and certificate storage means;
encrypting means for extracting, from server-side content storage means for storing said contents, the contents corresponding to the content send request received by said web server from said host-side terminal, creating a digest of said contents on the basis of said decrypted guest-side hash key and hash function, and encrypting said created digest and said contents on the basis of said decrypted host-side common key and encryption scheme; and
server-side content transmitting means for receiving the send request of said contents from said host-side terminal, and transmitting the digest and contents encrypted by said encrypting means to said host-side terminal,
wherein, at said host-side terminal,
the encrypted digest and contents received from said web server are decrypted with said host-side common key created by said host-side terminal;
said decrypted digest and contents are transmitted to said guest-side terminal through said session server, and
said contents are displayed on said host-side terminal, and
wherein, at said guest-side terminal,
said decrypted digest and contents are received from said host-side terminal;
a digest is created from said received contents on the basis of said created guest-side hash key and hash function; and
by comparing the digest with said received digest, said contents are displayed on said guest-side terminal if these matches.

7. A data communication system used at a host-side when a synchronization processing of contents stored on a web server is performed between a host-side terminal capable of encrypting communication through at least one or more session servers and at least one or more guest-side terminals, said data communication system used by said host-side terminal comprising:
host-side public key and certificate receiving means for receiving a server certificate and said public key from said web server for storage in host-side public key and certificate storage means;
public key and certificate transferring means for transferring said received server certificate and said public key to said guest-side terminal;
host-side key receiving means for receiving, from said guest-side terminal, a guest-side hash key created at said guest-side terminal and encrypted with said public key and a hash function thereof;
host-side common key creating means for creating a host-side common key used for encrypting said contents according to a common key encryption scheme, and storing said host-side common key and encryption scheme to host-side common key storage means;
host-side common key encrypting means for encrypting said created host-side common key and an encrypting scheme thereof with said public key stored in said host-side public key and certificate storage means;
host-side common key transmitting means for transmitting, to said web server, said encrypted host-side common key and encryption scheme, as well as said encrypted guest-side hash key received by said host-side key receiving means, and a hash function thereof;
host-side content receiving means for transmitting a content send request to said web server, and receiving from said web server the digest and contents thereof created using said guest-side hash key and said hash function and encrypted by said host-side common key in said web server;
host-side contents decrypting means for decrypting said received encrypted digest and contents thereof with said host-side common key stored in said host-side common key storage means, and storing thus decrypted contents in a host-side content storage means;
host-side content and digest transmitting means for transmitting said decrypted digest and contents thereof to said guest-side terminal through said session server; and
host-side content acquiring means for acquiring and displaying the contents stored in said host-side content storage means,
wherein, at said guest-side terminal,
said decrypted digest and contents thereof are received from said host-side terminal;
said digest is created from said received contents on the basis of said created guest-side hash key and said hash function; and
the digest and said received digest are compared and said contents are displayed on said guest-side terminal when the comparison produces a match.
